(19) Europäisches Patentamt
European Patent Office
Office européen des brevets

(11) **EP 2 009 404 A2**

(12) **EUROPÄISCHE PATENTANMELDUNG**

(43) Veröffentlichungstag:
**31.12.2008 Patentblatt 2009/01**

(51) Int Cl.:
***G01D 5/14*** *(2006.01)*

(21) Anmeldenummer: 08104531.2

(22) Anmeldetag: **24.06.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **29.06.2007 CH 10742007**
**28.03.2008 CH 4762008**

(71) Anmelder: **Melexis Technologies SA**
**2022 Bevaix (CH)**

(72) Erfinder:
• **Racz, Robert**
  **6300, Zug (CH)**
• **Manco, Angelo**
  **8952, Schlieren (CH)**
• **Triulzi, Michael**
  **6440, Brunnen (CH)**

(74) Vertreter: **Falk, Urs**
**Patentanwaltsbüro Dr. Urs Falk**
**Eichholzweg 9A**
**6312 Steinhausen (CH)**

(54) **Magnetstruktur zur Erfassung einer Relativbewegung zwischen der Magnetstruktur und einem Magnetfeldsensor**

(57) Eine Magnetstruktur (1) zur Erfassung einer Relativbewegung zwischen der Magnetstruktur und einem Magnetfeldsensor umfasst wenigstens zwei Permanentmagnete (3, 4). Die Permanentmagnete sind entlang einer vorbestimmten Linie, die beispielsweise gerade oder kreisförmig ist, in einem vorbestimmten Abstand zueinander angeordnet. Die Permanentmagnete sind in Richtung der Linie magnetisiert, wobei benachbarte Permanentmagnete eine entgegengesetzte Magnetisierungsrichtung aufweisen.

Fig. 2

**Beschreibung**

Die Erfindung betrifft eine Magnetstruktur zur Erfassung einer Relativbewegung zwischen der Magnetstruktur und einem Magnetfeldsensor der im Oberbegriff des Anspruchs 1 genannten Art.

Eine Kombination aus einer Magnetstruktur und einem Magnetfeldsensor bildet beispielsweise einen kontaktlosen Weggeber, mit dem eine lineare Relativbewegung zu messen ist. Weggeber für Wege im Millimeterbereich werden heute in grossen Stückzahlen in Vorrichtungen der Maschinen- und Automobilindustrie eingesetzt.

Bei Anwendungen, bei welchen die Weggeber starkem Schmutz, wie Staub, Fasern, Öldämpfe, etc. ausgesetzt sind, stellen magnetische Weggeber eine robuste und preiswerte Alternative zu den weitverbreiteten optischen Weggebern dar, da sie keine dichte Kapselung zwischen dem bewegten und dem unbewegten Maschinenteil der Vorrichtung benötigen.

Eine Kombination aus einer Magnetstruktur und einem Magnetfeldsensor kann auch einen Winkelgeber bilden, mit dem ein Drehwinkel zu messen ist.

Aus der EP 979988 ist ein Verfahren zur berührungslosen magnetischen Erfassung einer linearen Relativbewegung zwischen einer Magnetstruktur und elektronischen Sensoren bekannt. Die Magnetstruktur enthält entweder einen einzigen axial magnetisierten Permanentmagneten oder mehrere, nebeneinander angeordnete Permanentmagnete, die schraubenförmig magnetisiert sind. Die Sensoren sind seitlich im Abstand zu den Permanentmagneten angeordnet und messen die radiale und die axiale Komponente des von der Magnetstruktur erzeugten Magnetfelds.

Aus der EP 1243897 ist eine Vorrichtung bekannt, bei der das von der Magnetstruktur erzeugte Magnetfeld rotationssymmetrisch bezüglich einer Symmetrieachse ist und ein Magnetfeldsensor zwei Komponenten des Magnetfeldes misst, die in einer zur Symmetrieachse der Magnetfeldquelle orthogonal verlaufenden Ebene liegen.

Der Erfindung liegt die Aufgabe zugrunde, eine Magnetstruktur zur Verwendung in einem Weggeber zu entwickeln, wobei der Weggeber in einem vergleichsweise grossen Arbeitsbereich von typisch 20 bis 60 mm ein lineares Ausgangssignal liefern soll.

Die genannte Aufgabe wird erfindungsgemäss gelöst durch die Merkmale des Anspruchs 1. Vorteilhafte Ausgestaltungen ergeben sich aus den abhängigen Ansprüchen. Vorteilhafte Kombinationen der erfindungsgemässen Magnetstruktur mit einem Magnetfeldsensor für Anwendungen als Weggeber und Winkelgeber sind in den Ansprüchen 3 bis 9 definiert.

Die Erfindung wird nachfolgend anhand von Ausführungsbeispielen und anhand der Zeichnung näher erläutert. Die Figuren sind schematisch gezeichnet.

Fig. 1 - 6      zeigen eine Magnetstruktur und einen Magnetfeldsensor zur berührungslosen Erfassung einer linearen Relativbewegung gemäss verschiedenen Ausführungsbeispielen der Erfindung,

Fig. 7, 8      zeigen Diagramme,

Fig. 9      zeigen eine Magnetstruktur und einen Magnetfeldsensor zur berührungslosen Erfassung einer kreisförmigen Relativbewegung,

Fig. 10      zeigt ein Diagramm, und

Fig. 11-14      zeigen weitere Magnetstrukturen zur berührungslosen Erfassung einer kreisförmigen Relativbewegung.

Die Erfindung betrifft einerseits eine Magnetstruktur, die bei einem Weggeber als Magnetfeldquelle eingesetzt werden kann, und betrifft andererseits eine Magnetstruktur, die bei einem Winkelgeber als Magnetfeldquelle eingesetzt werden kann. Die folgenden Beispiele 1 bis 6 betreffen Magnetstrukturen für Weggeber, bei denen die Relativbewegung zwischen der Magnetstruktur und einem Magnetfeldsensor entlang einer vorbestimmten Achse erfolgt. Der Weggeber wird beispielsweise in einem pneumatischen oder hydraulischen Kolben-Zylinder System eingesetzt, wobei die Magnetstruktur im Kolben untergebracht und der Magnetfeldsensor am Zylinder befestigt ist.

Beispiel 1

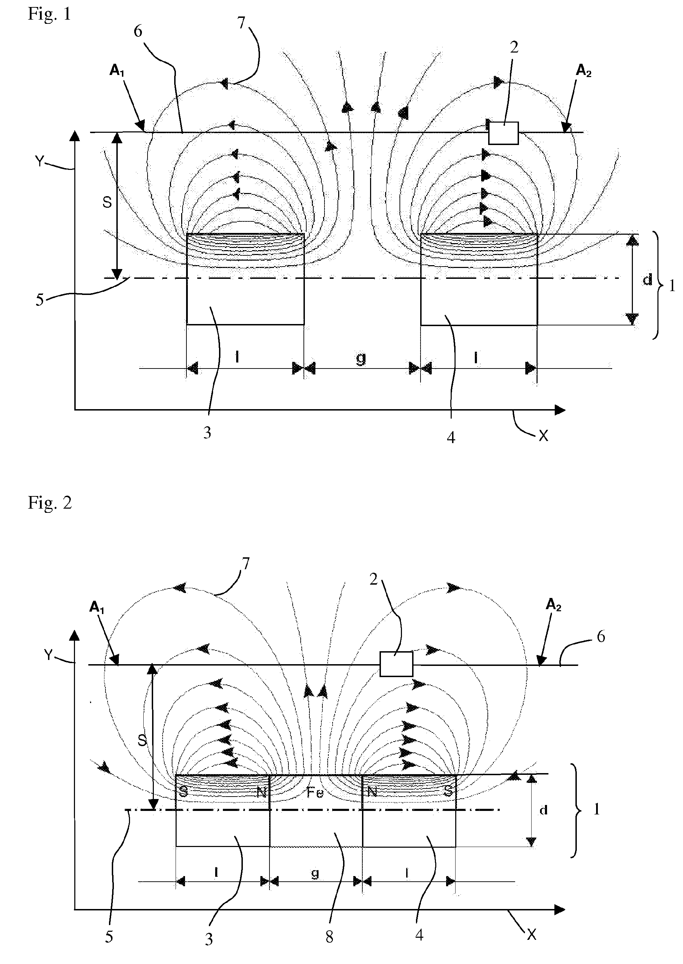

Die Fig. 1 zeigt eine Magnetstruktur 1 und einen Magnetfeldsensor 2, die zusammen einen Weggeber bilden. Die Magnetstruktur 1 besteht aus zwei zylindrischen Permanentmagneten 3 und 4. Die Permanentmagnete 3, 4 sind Stabmagnete, haben eine gleiche Länge 1 und einen gleichen Durchmesser d und sind im Abstand g zueinander auf einer gemeinsamen Achse 5 angeordnet. Die Stabmagnete sind axial magnetisiert, wobei ihre Magnetisierungsrichtung entgegengesetzt zueinander ist. Die Achse 5 ist sowohl eine Symmetrieachse der einzelnen Permanentmagnete 3, 4 als auch eine Symmetrieachse der Magnetstruktur 1: Das von der Magnetstruktur 1 erzeugte Magnetfeld ist rotationssymmetrisch bezüglich der Achse 5. Die Magnetstruktur 1 ist relativ zum Magnetfeldsensor 2 entlang einer parallel zur Symmetrieachse der Magnetstruktur 1 verlaufenden Achse 6 zwischen zwei Endpositionen $A_1$ und $A_2$ verschiebbar. Die Permanentmagnete 3 und 4 sind auf einem nicht dargestellten Träger befestigt.

In der Fig. 1 sind auch die Feldlinien 7 des von der Magnetstruktur 1 erzeugten Magnetfelds dargestellt, wobei die Feldlinien 7 aus Gründen der zeichnerischen Klarheit im Bereich unterhalb der Achse 5 weggelassen wurden und wobei Pfeilspitzen die Richtung des Magnetfelds anzeigen. Die beiden Achsen 5 und 6 definieren eine Ebene E, die der Zeichenebene entspricht.

Der Magnetfeldsensor 2 umfasst einen Sensorteil, der die in x-Richtung gerichtete Komponente $B_x$ und die in y-Richtung gerichtete Komponente $B_y$ des von der Magnetstruktur 1 erzeugten Magnetfelds B misst, wobei die x-Richtung parallel zur Achse 5 und die y-Richtung senkrecht zur Achse 6 verläuft und wobei sowohl die x-Richtung als auch die y-Richtung in der Ebene E liegen. Der Magnetfeldsensor 2 umfasst des weiteren eine elektronische Schaltung, die den Sensorteil betreibt und aus den vom Sensorteil gelieferten Signalen ein monotones Positionssignal bildet, das die auf der Achse 6 eingenommene Position des Magnetfeldsensors 2 charakterisiert. Das Positionssignal ist das Verhältnis $B_y/B_x$ oder die Funktion $\arctan(B_y/B_x)$ oder ein vom Verhältnis $B_y/B_x$ oder von der Funktion $\arctan(B_y/B_x)$ abgeleitetes, linearisiertes Signal. Die Linearisierung kann beispielsweise mittels einer Tabelle erfolgen. Der Magnetfeldsensor 2 kann beispielsweise ein bereits auf dem Markt erhältlicher magnetischer Winkelsensor sein, der die beiden Komponenten $B_x$ und $B_y$ misst und daraus das oben genannte Positionssignal bildet.

Bei einer Verschiebung entlang der geraden Strecke $A_1$ - $A_2$ ändert sich die Richtung des von der Magnetstruktur 1 erzeugten Magnetfelds B kontinuierlich: das Magnetfeld B dreht sich entlang der Strecke $A_1$ - $A_2$ in der durch die Achse 5 und die Strecke $A_1$ - $A_2$ aufgespannten Ebene. An den Endpositionen $A_1$ und $A_2$ ist die Richtung des Magnetfelds B jeweils gleich, wobei das Magnetfeld B entlang der Strecke $A_1$ - $A_2$ höchstens eine ganze Drehung um 360° ausführt. Die Magnetstruktur 1 ist dann optimal, wenn die Richtung des Magnetfelds B entlang der Strecke $A_1$ - $A_2$ gleichmässig rotiert, d.h. wenn die x-Komponente $B_x$ entlang der Strecke $A_1$ - $A_2$ so weit als möglich einen sinusförmigen Verlauf und die y-Komponente $B_y$ einen kosinusförmigen Verlauf aufweist. Je gleichmässiger die Rotation des Magnetfelds B entlang der Strecke $A_1$ - $A_2$ ist, desto höher ist die Linearität der Funktion $\arctan(B_y/B_x)$ und desto geringer sind die Schwankungen des Auflösungsvermögens entlang der Strecke $A_1$ - $A_2$. Die Gleichmässigkeit der Rotation des Magnetfelds B hängt einerseits vom Verhältnis der Länge 1 der beiden Permanentmagnete 3, 4, dem Abstand g zwischen den beiden Permanentmagneten 3, 4 und dem Durchmesser d der beiden Permanentmagnete 3, 4, und andererseits vom Abstand S zwischen den beiden Achsen 5 und 6 ab. Ein einzelner Permanentmagnet 3, 4 erzeugt ein Magnetfeld mit den gewünschten Eigenschaften, wenn der Durchmesser d und die Länge 1 die Beziehung

$$0.25*l \leq d \leq 4*l \qquad\qquad (1)$$

erfüllen. Bevorzugt ist jedoch

$$0.5*l \leq d \leq 1.5*l \qquad\qquad (2)$$

Die Magnetstruktur 1 erzeugt ein Magnetfeld mit den gewünschten Eigenschaften, wenn zusätzlich der Abstand g und die Länge 1 der Permanentmagnete 3, 4 die Beziehung

$$g \geq 0.25*l \qquad\qquad (3),$$

bevorzugt jedoch die Beziehung

$$g \geq 0.5*l \qquad\qquad (4)$$

erfüllen. Der Abstand g darf umgekehrt nicht zu gross sein, d.h.

$$g \leq 4*l \qquad\qquad (5)$$

Bei Anwendungen, bei denen die Strecke $A_1$ - $A_2$ gerade ist, d.h. bei Weggebern, ist bevorzugt

$$g \leq 2*l \tag{6},$$

und besonders bevorzugt

$$g \leq 1.5*l \tag{7}.$$

Im Beispiel ist $d \approx 0.8*1$ und $g \approx 1$. Der optimale Abstand des Magnetfeldsensors 2, d.h. der Abstand S zwischen den beiden Achsen 5 und 6 liegt in einem Bereich von

$$0.75*d \leq S \leq 2.5*d \tag{8}.$$

Die Länge der Strecke $A_1 - A_2$, auf der das Magnetfeld um genau 360° rotiert, hängt ab vom Abstand S. Es gilt jedoch

$$A_1 - A_2 \geq 2*l + g \tag{9}.$$

Beispiel 2

Die Fig. 2 zeigt eine Magnetstruktur 1, bei der zwischen den zylindrischen Permanentmagneten 3 und 4 ein zylindrischer Körper 8 aus ferromagnetischem Material angeordnet ist, und den Magnetfeldsensor 2. Die Buchstaben N und S bezeichnen den Nordpol bzw. Südpol der Permanentmagnete 3, 4. Der Körper 8 ist rotationssymmetrisch bezüglich der Achse 5 und hat bei diesem Beispiel den gleichen Durchmesser wie die Permanentmagnete 3 und 4. Die relative magnetische Permeabilität des ferromagnetischen Körpers 8 kann einen beliebigen Wert aufweisen, ist mit Vorteil jedoch grösser als 100. Der ferromagnetische Körper 8 besteht beispielsweise aus Eisen (Fe). Der ferromagnetische Körper 8 dient dazu, das von den Permanentmagneten erzeugte Magnetfeld entlang der Strecke $A_1 - A_2$ dahingehend zu optimieren, dass die Richtung des Magnetfelds B soll entlang der Strecke $A_1 - A_2$ möglichst gleichmässig rotiert. Der Verlauf der Feldlinien 7 wird im Bereich des ferromagnetischen Körpers 8 verändert, da die Feldlinien 7 senkrecht aus der Oberfläche des ferromagnetischen Körpers 8 austreten. Um eine gleichmässige Rotation des Magnetfelds entlang der Strecke $A_1 - A_2$ zu erhalten, sind auch bei diesem Beispiel die Gleichungen (1) bis (8) zu beachten. Die Länge der Strecke $A_1 - A_2$, auf der das Magnetfeld um genau 360° rotiert, hängt ab vom Abstand S. Es gilt auch hier die Gleichung (9).

Der Durchmesser des Körpers 8 kann auch etwas grösser oder kleiner als der Durchmesser der Permanentmagnete sein, solange dies die Gleichmässigkeit der Drehung des Magnetfelds nicht zu sehr vermindert.

Die folgenden Beispiele betreffen weitere Varianten der anhand der Beispiele 1 und 2 erläuterten Grundideen.

Beispiel 3

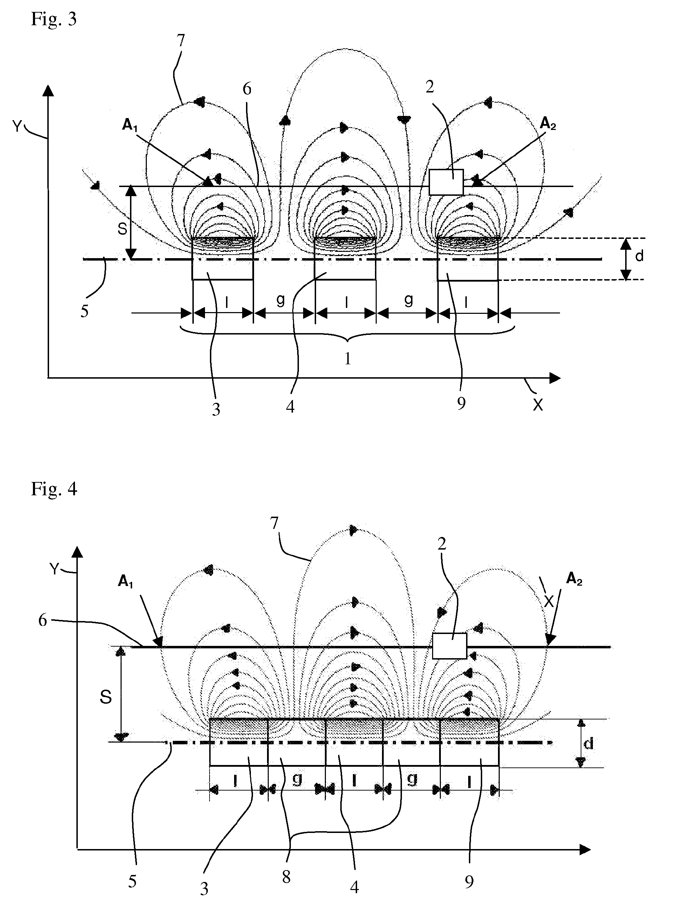

Die Fig. 3 zeigt eine Magnetstruktur 1, die aus drei zylindrischen Permanentmagneten 3, 4 und 9 besteht. Die Permanentmagnete 3, 4 und 9 sind wiederum Stabmagnete, haben eine gleiche Länge 1 und einen gleichen Durchmesser d und sind auf der gemeinsamen Achse 5 angeordnet. Die Permanentmagnete 3, 4 und 9 sind axial magnetisiert, wobei die Magnetisierungsrichtung benachbarter Permanentmagnete entgegengesetzt zueinander ist. Die Magnetisierungsrichtung wechselt also von Permanentmagnet zu Permanentmagnet um 180°. Dementsprechend ändert auch der Drehsinn der Feldlinien 7, wie dies aus der Fig. 3 ersichtlich ist.

Beispiel 4

Die Fig. 4 zeigt eine Magnetstruktur 1, bei der zwischen den Permanentmagneten 3 und 4 und zwischen den Permanentmagneten 4 und 9 je ein Körper 8 aus ferromagnetischem Material angeordnet ist. Die Körper 8 sind rotationssymmetrisch bezüglich der Achse 5 und haben auch bei diesem Beispiel den gleichen Durchmesser wie die Permanentmagnete 3, 4 und 9.

Beispiel 5

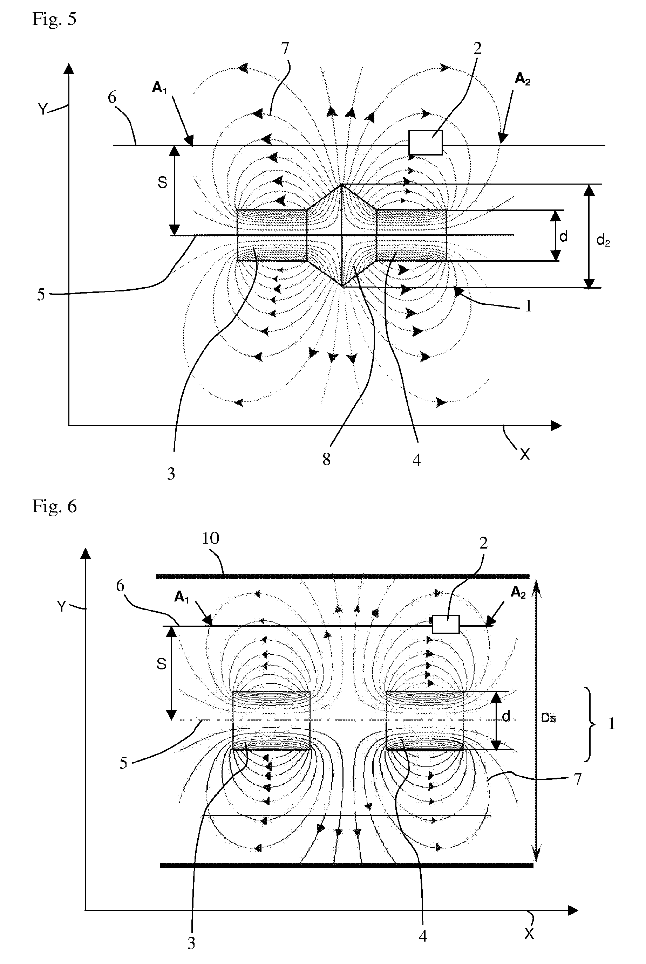

Die Fig. 5 zeigt eine Magnetstruktur 1, bei der zwischen den zylindrischen Permanentmagneten 3 und 4 der Körper 8 aus ferromagnetischem Material angeordnet ist, und den Magnetfeldsensor 2. Der Körper 8 ist rotationssymmetrisch bezüglich der Achse 5, sein Durchmesser nimmt mit zunehmendem Abstand vom Permanentmagneten 3 bzw. 4 kontinuierlich vom Wert d auf den Wert $d_2$ zu und erreicht den maximalen Wert $d_2$ in der Mitte zwischen den beiden Permanentmagneten 3 und 4.

Beispiel 6

Die Fig. 6 zeigt eine Magnetstruktur 1, die zusätzlich eine magnetische Abschirmung 10 umfasst, die aus einem Material mit einer hohen relativen magnetischen Permeabilität von mindestens 100 besteht. Die magnetische Abschirmung 10 umgibt den durch die Permanentmagnete 3 und 4 und den Magnetfeldsensor 2 gebildeten Weggeber. Die magnetische Abschirmung 10 ist bevorzugt ein zylindrisches Rohr. Im Beispiel hat dieses Rohr den Durchmesser $D_S$. Die magnetische Abschirmung 10 schirmt den Weggeber einerseits gegen äussere Magnetfelder ab, die in x-Richtung verlaufen, und kann andererseits bei geeigneter Dimensionierung zur Optimierung des Verlaufs der Feldlinien 7 im Bereich der Strecke $A_1$ - $A_2$ beitragen.

Die magnetische Abschirmung 10 ist entweder zusammen mit dem Rest der Magnetstruktur 1 relativ zum Magnetfeldsensor 2 verschiebbar oder die Magnetstruktur 1 (ohne magnetische Abschirmung 10) ist relativ zum Magnetfeldsensor 2 und der magnetischen Abschirmung 10 verschiebbar. Im zweiten Fall kann die Abschirmung 10 im Bereich des Magnetfeldsensors 2 eine Öffnung enthalten, um ihren Einfluss auf das von den Permanentmagneten der Magnetstruktur 1 erzeugte Magnetfeld am Ort des Magnetfeldsensors 2 zu reduzieren.

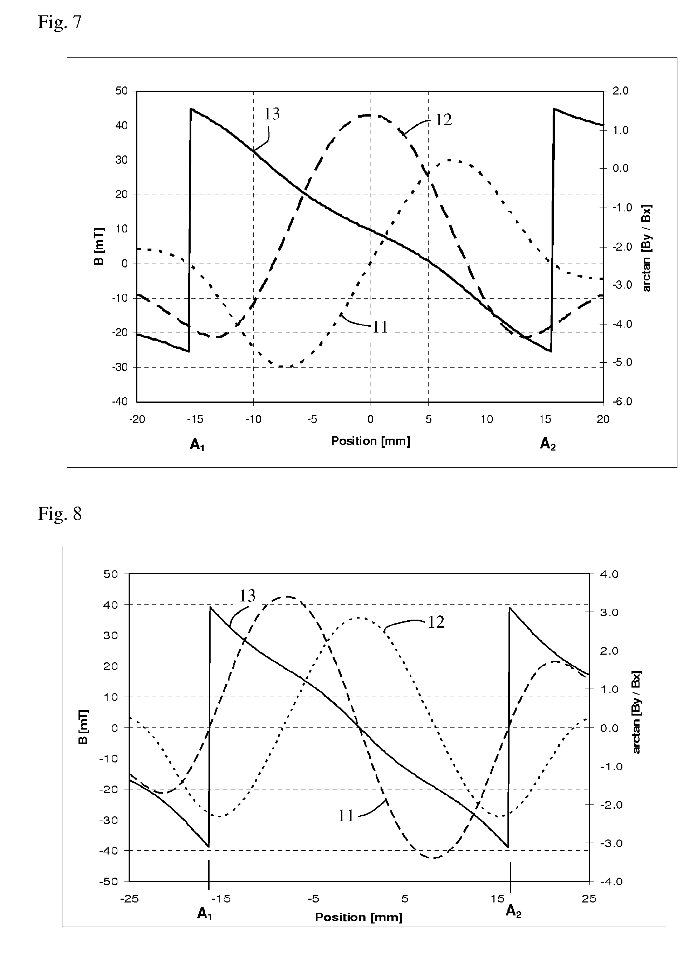

Die Fig. 7 zeigt für das Beispiel 1, die Fig. 8 zeigt für das Beispiel 2 drei Kurven, nämlich den Verlauf 11 der Komponente $B_x$, den Verlauf 12 der Komponente $B_y$ des Magnetfelds und die daraus berechnete Funktion $\arctan(B_y/B_x)$ in Abhängigkeit der auf der Achse 6 eingenommenen Position des Magnetfeldsensors 2. Die Funktion $\arctan(B_y/B_x)$ ist mit dem Bezugszeichen 13 gekennzeichnet. Die Funktion $\arctan(B_y/B_x)$ ist in allen Fällen eine monotone Funktion und eine innerhalb gewisser Toleranzen lineare Funktion. Diese Diagramme zeigen, dass die Linearität der Funktion $\arctan(B_y/B_x)$ bei Anwesenheit der ferromagnetischen Körper 8 grösser ist als bei deren Abwesenheit.

Weil bei allen vorstehend beschriebenen Beispielen das von der Magnetstruktur 1 erzeugte Magnetfeld B rotationssymmetrisch bezüglich der Achse 5 ist, kann sich in einem Kolben-Zylinder System der Kolben während der Relativverschiebung von Magnetstruktur 1 und Magnetfeldsensor 2 entlang der Achse 5 relativ zum Zylinder drehen, ohne dass dies das Positionssignal beeinflusst.

Die anhand der Fig. 1 bis 6 beschriebenen Magnetstrukturen 1 besitzen entweder zwei oder drei Permanentmagnete, die alle die gleiche Länge 1 und den gleichen Durchmesser d aufweisen. Obwohl dies die bevorzugte Lösung ist, können die Permanentmagnete auch unterschiedliche Längen und/oder unterschiedliche Durchmesser aufweisen. In diesem Fall sind die Gleichungen (1) bis (7) zu ersetzen durch die Gleichungen (1A) bis (7A)

$$0.25 * l_{min} \leq d \leq 4 * l_{max} \qquad (1A)$$

$$0.5 * l_{min} \leq d \leq 1.5 * l_{max} \qquad (2A)$$

$$g \geq 0.25 * l_{min} \qquad (3A),$$

$$g \geq 0.5 * l_{min} \qquad (4A)$$

$$g \leq 4 * l_{max} \qquad (5A)$$

$$g \leq 2 * l_{max} \qquad (6A),$$

$$g \leq 1.5*l_{max} \hspace{4cm} (7A),$$

wobei die Grösse $1_{min}$ die entlang der Achse 5 gemessene Länge des kürzesten der Permanentmagnete und die Grösse $l_{max}$ die entlang der Achse 5 gemessene Länge des längsten der Permanentmagnete bezeichnen.

Die folgenden Beispiele 7 bis 10 betreffen Magnetstrukturen für Winkelgeber, bei denen die Relativbewegung zwischen der Magnetstruktur und einem Magnetfeldsensor entlang einer Kreisbahn erfolgt. Diese Winkelgeber eignen sich besonders für Anwendungen mit durchgehenden Wellen. Bei diesen Beispielen ist unter der Richtung der Magnetisierung immer die Richtung entlang der Kreisbahn gemeint. Dass benachbarte Permanentmagnete eine umgekehrte Magnetisierungsrichtung aufweisen, bedeutet, dass sich entweder ihre Nordpole oder ihre Südpole einander gegenüberliegen. Bei diesen Beispielen entspricht die vom Sensorteil des Magnetfeldsensors gemessene lokale x-Komponente der bezüglich der Kreislinie tangentialen Komponente $B_t$ und die gemessene lokale y-Komponente der bezüglich der Kreislinie normalen oder radialen Komponente $B_r$ des Magnetfelds. Die Magnetstruktur ist beispielsweise auf einer durchgehenden, sich drehenden Welle befestigt und der Magnetfeldsensor ortsfest im Abstand neben der Welle angebracht. Die Beispiele für die Erfassung einer linearen Relativbewegung und für die Erfassung einer kreisförmigen Relativbewegung können im Prinzip ineinander transformiert werden, indem die Achsen 5 und 6 auf zwei konzentrische Kreise oder zwei konzentrische Kreisabschnitte abgebildet werden. Die Gleichungen (1) bis (8) bzw. (1A) bis (7A) und (8) gelten sinngemäss.

### Beispiel 7

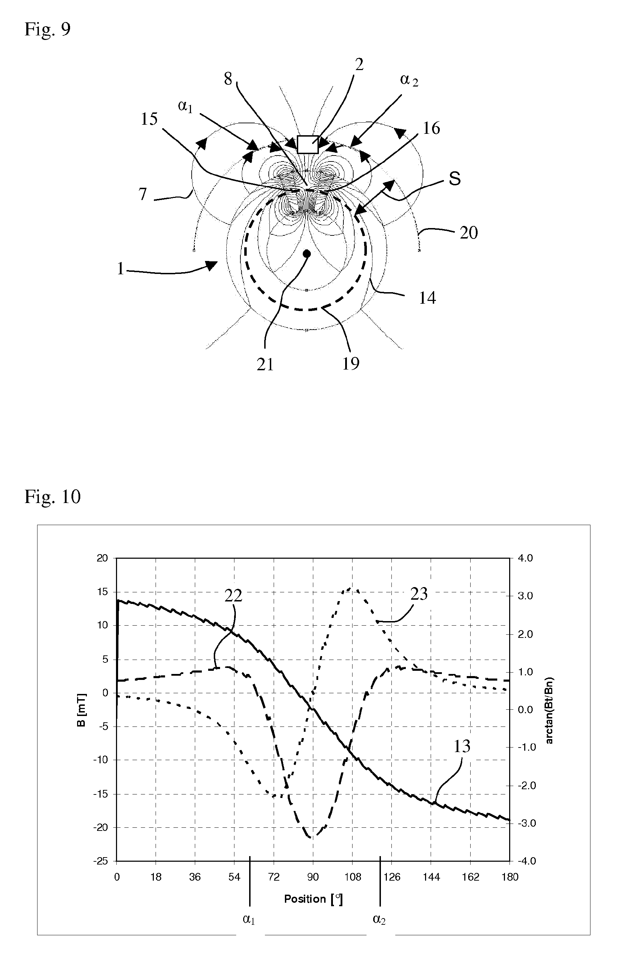

Die Fig. 9 zeigt eine Magnetstruktur 1, die zwei Permanentmagnete 15 und 16 und zwei ferromagnetische Körper 8 und 14 umfasst, die auf einer Kreislinie 19 angeordnet sind. Die Kreislinie 19 ist eine Symmetrieachse der Permanentmagnete 15 und 16. Die Relativbewegung zwischen der Magnetstruktur 1 und dem Magnetfeldsensor 2 erfolgt entlang einer zur Kreislinie 19 konzentrischen Kreislinie 20. Die Permanentmagnete 15 und 16 sind deshalb bevorzugt bogenförmig ausgebildete Magnete, die entlang der Kreislinie 19 verlaufen. Die Permanentmagnete 15 und 16 sind im Abstand zueinander angeordnet und ihre Magnetisierungsrichtung verläuft in Kreisrichtung gesehen entgegengesetzt zueinander. Der Querschnitt der Permanentmagnete 15 und 16 ist bevorzugt rund oder rechteckförmig. Die Permanentmagnete 15 und 16 können jedoch auch zwei gerade Stabmagnete sein. Die Permanentmagnete 15 und 16 können aber auch aus mehreren geraden, einander berührenden Stabmagneten zusammengesetzt sein, die die gleiche Magnetisierungsrichtung aufweisen. Die Fig. 10 zeigt den Verlauf 22 und 23 der bezüglich des Mittelpunkts 21 der Kreislinie 19 radialen Komponente $B_r$ bzw. tangentialen Komponente $B_t$ des von der Magnetstruktur 1 erzeugten Magnetfelds B. In der Regel dreht sich die Magnetstruktur 1 um eine Achse, die durch den Mittelpunkt 21 und senkrecht zur Zeichenebene verläuft, während der Magnetfeldsensor 2 ortsfest angeordnet ist. Die vom Magnetfeldsensor 2 gemessenen Komponenten $B_x$ und $B_y$ definieren dann ein lokales rechtwinkliges Koordinatensystem, wobei die lokale Komponente $B_x$ der tangentialen Komponente $B_t$ und die lokale Komponente $B_y$ der radialen Komponente $B_r$ entspricht. In der Fig. 10 ist auch die aus den gemessenen Komponenten abgeleitete Funktion $arctan(B_y/B_x) = arctan(B_r/B_t)$ dargestellt. Daraus ist ersichtlich, dass die Funktion $arctan(B_y/B_x)$ in einem begrenzten Winkelbereich von $\alpha_1$ bis $\alpha_2$, der im Beispiel von $\alpha_1 = -30°$ bis $\alpha_2 = +30°$ reicht, monoton und annähernd linear ist.

### Beispiel 8

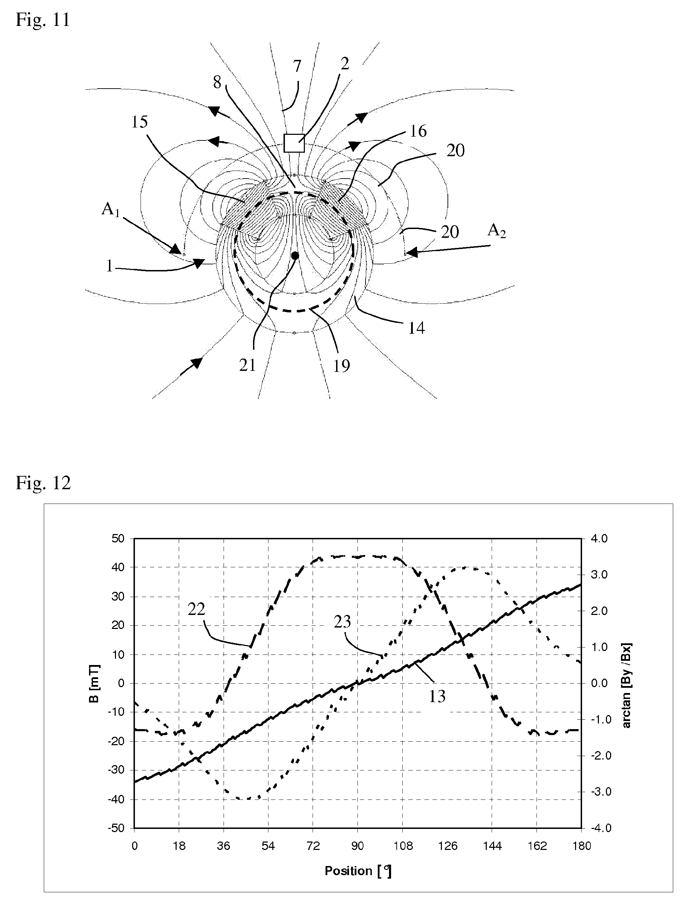

Die Fig. 11 zeigt eine Magnetstruktur 1, bei der die beiden Permanentmagnete 15 und 16 länger sind als beim Beispiel 7, d.h. winkelmässig einen grösseren Anteil der Kreislinie 19 belegen. Dementsprechend vergrössert sich der Winkelbereich, in dem die Funktion $arctan(B_y/B_x)$ annähernd linear ist. Bei diesem Beispiel beträgt der Winkelbereich bereits 180°, wie aus der Fig. 12 ersichtlich ist.

### Beispiel 9

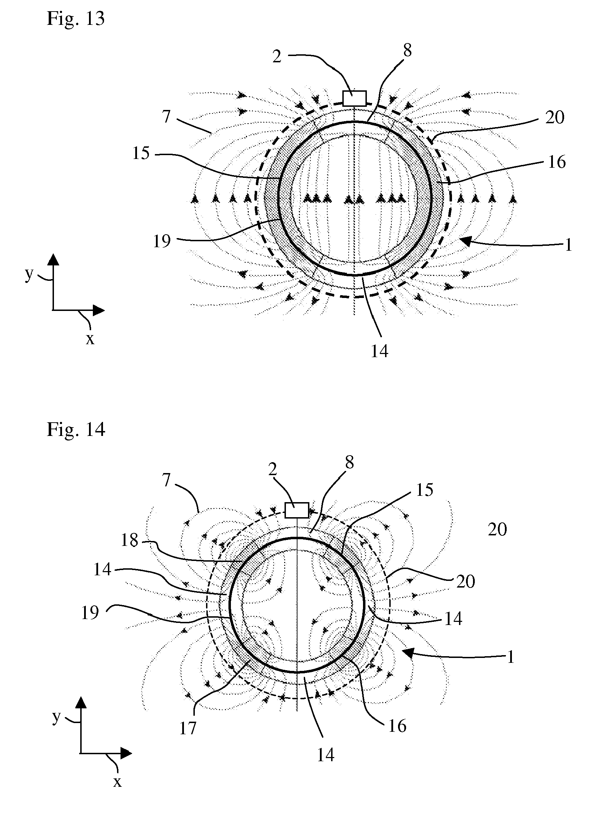

Die Fig. 13 zeigt eine Magnetstruktur 1, bei der die beiden Permanentmagnete 15 und 16 länger sind als beim Beispiel 8. Der Winkelbereich, in dem die Funktion $arctan(B_y/B_x)$ annähernd linear ist beträgt hier 360°.

### Beispiel 10

Die Fig. 14 zeigt eine Magnetstruktur 1, die vier Permanentmagnete 15 bis 18 umfasst. Das von der Magnetstruktur 1 erzeugte Magnetfeld führt entlang der Kreislinie 20 zwei ganze Umdrehungen aus, d.h. eine Drehung um 720°. Das von den Permanentmagneten 17 und 18 auf dem ihnen gegenüberliegenden Abschnitt der Kreislinie 20 erzeugte Magnetfeld ist stärker als das von den Permanentmagneten 15 und 16 auf dem ihnen gegenüberliegenden Abschnitt der Kreislinie 20 erzeugte Magnetfeld. Dies kann beispielsweise erreicht werden, indem die Permanentmagnete 17 und 18 länger sind und/oder einen grösseren Durchmesser und/oder eine stärkere Magnetisierung aufweisen als die Permanentmagnete 15 und 16. Der Magnetfeldsensor 2 berechnet deshalb auch den Wert $|B_x^2 + B_y^2|$ und bestimmt daraus, ob er sich im Winkelbereich 0 bis 180° oder im Winkelbereich 180° bis 360° befindet. Diese Magnetstruktur 1 ist deshalb ebenfalls geeignet für Positionsmessungen im Winkelbereich von 0 bis 360°.

Beispiel 11

Die Lösung des Beispiels 10 lässt sich dahingehend verallgemeinern, dass mindestens drei Permanentmagnete entlang der Kreislinie 19 angeordnet sind, wobei das von den Permanentmagneten entlang der Kreislinie 20 erzeugte Magnetfeld zwischen den beiden Endpunkten der Bahn kontinuierlich oder diskontinuierlich zunimmt und sich um mehr als 360° dreht, wobei die Stärke des Magnetfelds auf jeden Fall so zunimmt, dass die Position des Magnetfeldsensors 2 bezüglich der Magnetstruktur 1 aus dem Verhältnis $B_y/B_x$ oder einer davon abgeleiteten Funktion und dem Wert $|B_x^2 + B_y^2|$ eindeutig bestimmt werden kann. Diese Lösung ermöglicht eine höhere Auflösung der Winkelmessung.

Beispiel 12

Die Lösung des Beispiels 10 lässt sich auch bei den anhand der Beispiele 1 bis 6 beschriebenen Weggebern anwenden und kann dahingehend verallgemeinert werden, dass mehr als zwei, nämlich mindestens drei Permanentmagnete entlang der Achse 5 angeordnet sind, wobei das von den Permanentmagneten entlang der vom Magnetfeldsensor 2 zurückgelegten Bahn erzeugte Magnetfeld zwischen den beiden Endpunkten der Bahn kontinuierlich oder diskontinuierlich zunimmt und sich um mehr als 360° dreht, wobei die Stärke des Magnetfelds auf jeden Fall so zunimmt, dass die Position des Magnetfeldsensors 2 bezüglich der Magnetstruktur 1 aus dem Verhältnis $B_y/B_x$ oder einer davon abgeleiteten Funktion und dem Wert $|B_x^2 + B_y^2|$ eindeutig bestimmt werden kann. Der Arbeitsbereich eines solchen Weggebers lässt sich problemlos auf mehr als 60 mm vergrössern.
Die bei den Beispielen 7 bis 10 vorhandenen ferromagnetischen Körper 8, 14 verbessern die Linearität der Funktion arctan($B_y/B_x$), sie können aber auch weggelassen werden.
Die zylindrischen Permanentmagnete wie auch die ferromagnetischen Körper können bei allen Ausführungsbeispielen durch ringförmige Permanentmagnete, d.h. Stabmagnete mit einer Längsbohrung, bzw. ringförmige Körper ersetzt werden.
Die Permanentmagnete können bei allen Ausführungsbeispielen verlängert werden, indem auf mindestens einer Stirnseite ein Körper aus ferromagnetischem Material angebracht wird, dessen relative Permeabilität mindestens 100 beträgt.
Anhand der vorhergehenden Beispiele sind verschiedene Aspekte der Erfindung erläutert worden. Es ist klar, dass die Merkmale der verschiedenen Beispiele nicht auf das entsprechende Beispiel beschränkt sind, sondern sich auch bei den anderen Beispielen anwenden lassen.

**Patentansprüche**

1. Magnetstruktur (1) zur Erfassung einer Relativbewegung zwischen der Magnetstruktur und einem Magnetfeldsensor (2), die wenigstens zwei Permanentmagnete (3, 4, 9; 15, 16, 17, 18) umfasst, **dadurch gekennzeichnet, dass** die Permanentmagnete entlang einer vorbestimmten Linie in einem vorbestimmten Abstand g zueinander angeordnet sind, dass die Permanentmagnete in Richtung der Linie magnetisiert sind, dass benachbarte Permanentmagnete eine entgegengesetzte Magnetisierungsrichtung aufweisen und dass der Abstand g die beiden Bedingungen g ≥ $0.25*1_{min}$ und g ≤ $4*1_{max}$ erfüllt, wobei die Grösse $1_{min}$ die entlang der Linie gemessene Länge des kürzesten der Permanentmagnete und die Grösse $1_{max}$ die entlang der Linie gemessene Länge des längsten der Permanentmagnete bezeichnen.

2. Magnetstruktur nach Anspruch 1, **dadurch gekennzeichnet, dass** zwischen wenigstens zwei Permanentmagneten ein Körper (8) aus einem magnetischen Material mit einer relativen magnetischen Permeabilität von mindestens 100 angeordnet ist.

3. Weggeber, umfassend einen Magnetfeldsensor (2) und eine Magnetstruktur (1) nach Anspruch 1 oder 2, wobei der Magnetfeldsensor und die Magnetstruktur entlang einer vorbestimmten Bahn zwischen zwei vorgegebenen Endpunkten relativ zueinander verschiebbar sind und wobei sich die Richtung des von der Magnetstruktur erzeugten Magnetfelds entlang der Bahn dreht, **dadurch gekennzeichnet, dass** die Drehung des Magnetfelds bei der Relativbewegung vom einen Endpunkt zum andern Endpunkt in der durch die Linie und die Bahn aufgespannten Ebene höchstens 360° beträgt.

4. Weggeber, umfassend einen Magnetfeldsensor (2) und eine Magnetstruktur (1) nach Anspruch 1 oder 2, wobei der Magnetfeldsensor und die Magnetstruktur entlang einer vorbestimmten Bahn zwischen zwei vorgegebenen Endpunkten relativ zueinander verschiebbar sind und wobei sich die Richtung des von der Magnetstruktur erzeugten Magnetfelds entlang der Bahn dreht, **dadurch gekennzeichnet, dass** die Magnetstruktur mindestens drei Permanentmagnete aufweist, dass die Stärke des von den Permanentmagneten entlang der Bahn erzeugten Magnetfelds zwischen den beiden Endpunkten der Bahn kontinuierlich oder diskontinuierlich zunimmt und sich um mehr als 360° dreht.

5. Weggeber nach Anspruch 3 oder 4, **dadurch gekennzeichnet, dass** die genannte Linie und die genannte Bahn in einem vorbestimmten Abstand S zueinander angeordnet sind und dass der Abstand S die Bedingung 0.75*d ≤ S ≤ 2.5*d erfüllt, wobei die Grösse d den senkrecht zur genannten Linie gemessenen Durchmesser der Permanentmagnete bezeichnet.

6. Winkelgeber, umfassend einen Magnetfeldsensor (2) und eine Magnetstruktur (1) nach Anspruch 1 oder 2, wobei der Magnetfeldsensor und die Magnetstruktur entlang einer vorbestimmten Kreisbahn zwischen zwei vorgegebenen Endpunkten relativ zueinander verschiebbar sind und wobei sich die Richtung des von der Magnetstruktur erzeugten Magnetfelds entlang der Kreisbahn dreht, **dadurch gekennzeichnet, dass** die Drehung des Magnetfelds bei der Relativbewegung vom einen Endpunkt zum andern Endpunkt in der durch die Linie und die Kreisbahn aufgespannten Ebene höchstens 360° beträgt.

7. Winkelgeber, umfassend einen Magnetfeldsensor (2) und eine Magnetstruktur (1) nach Anspruch 1 oder 2, wobei der Magnetfeldsensor und die Magnetstruktur entlang einer vorbestimmten Kreisbahn zwischen zwei vorgegebenen Endpunkten relativ zueinander verschiebbar sind und wobei sich die Richtung des von der Magnetstruktur erzeugten Magnetfelds entlang der Kreisbahn dreht, **dadurch gekennzeichnet, dass** die Magnetstruktur vier Permanentmagnete umfasst, von denen zwei benachbarte Permanentmagnete eine stärkere Magnetisierung haben als die anderen beiden Permanentmagnete, und dass die Drehung des Magnetfelds bei der Relativbewegung vom einen Endpunkt zum andern Endpunkt höchstens 720° beträgt.

8. Winkelgeber, umfassend einen Magnetfeldsensor (2) und eine Magnetstruktur (1) nach Anspruch 1 oder 2, wobei der Magnetfeldsensor und die Magnetstruktur entlang einer vorbestimmten Kreisbahn zwischen zwei vorgegebenen Endpunkten relativ zueinander verschiebbar sind und wobei sich die Richtung des von der Magnetstruktur erzeugten Magnetfelds entlang der Kreisbahn dreht, **dadurch gekennzeichnet, dass** die Magnetstruktur mindestens drei Permanentmagnete aufweist, dass die Stärke des von den Permanentmagneten entlang der Kreisbahn erzeugten Magnetfelds zwischen den beiden Endpunkten der Kreisbahn kontinuierlich oder diskontinuierlich zunimmt und sich um mehr als 360° dreht.

9. Winkelgeber nach einem der Ansprüche 6 bis 8, **dadurch gekennzeichnet, dass** die genannte Linie und die genannte Kreisbahn in einem vorbestimmten Abstand S zueinander angeordnet sind und dass der Abstand S die Bedingung 0.75*d ≤ S ≤ 2.5*d erfüllt, wobei die Grösse d den radial zur Kreisbahn gemessenen Durchmesser der Permanentmagnete bezeichnet.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 979988 A
- EP 1243897 A